# EUROPÄISCHE PATENTSCHRIFT

(11) **EP 1 767 833 B1**
(45) Veröffentlichungstag und Bekanntmachung des Hinweises auf die Patenterteilung: **19.03.2008**
(21) Anmeldenummer: 06017406.7
(22) Anmeldetag: 22.08.2006
(51) Int. Cl.: F16H 63/42, B60K 31/00

(54) **Fahrgeschwindigkeitsregelsystem für ein Kraftfahrzeug mit Handschaltgetriebe**
Adaptive cruise control for a vehicle equipped with a manual transmission
Système de commande de vitesse adaptatif pour un véhicule automobile avec transmission manuelle

(30) Priorität: 23.09.2005 DE 102005045384
(43) Veröffentlichungstag der Anmeldung: 28.03.2007
(73) Patentinhaber: Bayerische Motorenwerke Aktiengesellschaft, 80809 München (DE)
(72) Erfinder: Binder, Jürgen, 80807 München (DE); Brandstäter, Martin, 29605 Greenville (US)

(56) Entgegenhaltungen:
- EP-A- 0 695 893
- US-A- 4 495 913
- US-B1- 6 530 291

## Beschreibung

Die Erfindung bezieht sich auf ein Fahrgeschwindigkeitsregelsystem für ein Kraftfahrzeug mit Handschaltgetriebe nach dem Oberbegriff des Patentanspruchs 1.

Kraftfahrzeuge mit Fahrgeschwindigkeitsregelsystemen sind seit langem bekannt. Die meisten derzeit erhältlichen Fahrgeschwindigkeitsregelsysteme regeln die Geschwindigkeit des Kraftfahrzeugs auf eine vorgegebene Wunschgeschwindigkeit. Neben diesen Fahrgeschwindigkeitsregelsystemen können heute bereits bei einigen Herstellern auch um eine Abstandsregelung erweiterte Fahrgeschwindigkeitsregelsysteme erworben werden. Derartige, bspw. bei der Anmelderin der vorliegenden Patentanmeldung unter der Bezeichnung "Active Cruise Control" angebotene Systeme ermöglichen es, das Kraftfahrzeug unter Einhaltung eines gewünschten Abstands zu einem vor diesem fahrenden Kraftfahrzeug (dieses wird als Zielobjekt bezeichnet) mit einer gewünschten oder einer entsprechend geringeren Geschwindigkeit automatisch zu bewegen. Vom Prinzip her ist dabei die allgemein bekannte Fahrgeschwindigkeitsregelung, die eine bestimmte vorgegebene Geschwindigkeit einhält, um eine zusätzliche Abstandsfunktion erweitert, so dass der Einsatz einer solchen "aktiven" Fahrgeschwindigkeitsreglung auch im dichten Autobahn- und Landstrassenverkehr möglich wird. Diese sog. "aktive Fahrgeschwindigkeitsregelung" hält die vorgegebene Wunschgeschwindigkeit, wenn die eigene Fahrspur frei ist. Erkennt eine am Kraftfahrzeug angebrachte Abstandssensorik, die insbesondere auf Radarbasis arbeiten kann, ein vorausfahrendes Zielobjekt bzw. (Kraft-)Fahrzeug in der eigenen Spur, so wird die eigene Geschwindigkeit, bspw. durch Veranlassen eines geeigneten Bremsmoments, an die Geschwindigkeit des vorausfahrenden Kraftfahrzeugs bzw. Zielobjekts derart angepasst, dass eine in der "aktiven Fahrgeschwindigkeitsregelung" bzw. im entsprechenden Geschwindigkeits-Regelsystem enthaltene Abstandsregelung automatisch einen situationsgerechten Abstand zum vorausfahrenden Kraftfahrzeug bzw. Zielobjekt einhält.

In der Regel werden diese Fahrgeschwindigkeitsregelsysteme in Kraftfahrzeugen eingesetzt, die mit einem Automatikgetriebe ausgestattet sind. Sie können jedoch auch in Kraftfahrzeuge mit Handschaltgetrieben verwendet werden. Hierbei stellt sich jedoch das Problem, dass eine Regelung im jeweils eingelegten Gang nur innerhalb bestimmter Drehzahlgrenzen möglich ist und der Fahrer somit selbst für eine optimale Gangwahl verantwortlich ist.

Bei derzeit bekannten Fahrgeschwindigkeitsregelsystemen für Kraftfahrzeuge mit Handschaltgetriebe sind in der Steuereinheit für jeden Gang eine obere und untere Aufforderungs-Drehzahlschwelle hinterlegt, bei deren Erreichen dem Fahrer eine Meldung ausgegeben wird, dass er einen Gangwechsel vornehmen muss, falls die Fahrgeschwindigkeitsregelung nicht deaktiviert werden soll. Neben den Aufforderungs-Drehzahlschwellen sind dazugehörige Abschalt-Drehzahlschwellen hinterlegt, die dazu dienen, dass, falls der Fahrer auf die Meldung nicht entsprechend reagiert, das Fahrgeschwindigkeitsregelsystem deaktiviert wird. Bei derartigen Systemen muss der Abstand zwischen der Aufforderungs-Drehzahlschwelle und der Abschalt-Drehzahlschwelle so groß gewählt werden, dass dem Fahrer in jedem Fall ausreichend Zeit für den notwendigen Schaltvorgang zur Verfügung steht. Durch diesen großen Abstand kann es zu Situationen kommen, in denen unnötig oder bereits sehr früh die Aufforderung zum Schalten ausgegeben wird, und der Fahrer dadurch unnötig belästigt wird.

Aus der DE 102 10 545 A1 ist ein Fahrgeschwindigkeitsregelsystem für Kraftfahrzeuge mit Handschaltgetrieben mit einer Ausgabeeinheit zur Ausgabe einer Schaltaufforderung an den Fahrer bekannt, wobei die Schaltaufforderung in Abhängigkeit vom Beschleunigungsbedarf ausgegeben wird.

Schließlich ist aus der US 6 530 291 B1 ein automatisiertes Getriebe mit einer automatischen Herunterschaltvorrichtung bekannt, die eine Anpassung der Schaltzeitpunkte in Abhängigkeit von der Änderungsrate der erfassten Fahrzeuggeschwindigkeit vornimmt. Der Schaltzeitpunkt wird dabei basierend auf der Änderungsrate der erfassten Fahrzeuggeschwindigkeit und einer für den Schaltvorgang erforderlichen Zeitdauer derart ermittelt, dass der Schaltvorgang beendet ist, bevor die Fahrzeuggeschwindigkeit eine Zielgeschwindigkeit erreicht hat.

Aufgabe der Erfindung ist es, ein verbessertes Fahrgeschwindigkeitsregelsystem anzugeben, bei der die Ausgabe unnötiger Schaltaufforderungen reduziert oder sogar vermieden wird.

Diese Aufgabe wird durch ein Verfahren nach Patentanspruch 1 gelöst. Vorteilhafte Weiterbildungen sind die Gegenstände der abhängigen Ansprüche.

Das erfindungsgemäße Fahrgeschwindigkeitsregelsystem für ein Kraftfahrzeug mit Handschaltgetriebe umfasst eine Steuereinheit, das die aktuell ermittelte Drehzahl des Kraftfahrzeugs mit einer vorgegebenen gangabhängigen Aufforderungs-Drehzahlschwelle vergleicht und das bei Erreichen der vorgegebenen gangabhängigen Aufforderungs-Drehzahlschwelle ein Signal an eine Ausgabeeinheit zur Ausgabe einer Schaltaufforderung an den Fahrer des Kraftfahrzeugs sendet. Das erfindungemäße Fahrgeschwindigkeitsregelsystem zeichnet sich dadurch aus, dass die vorgegebene Aufforderungs-Drehzahlschwelle in Abhängigkeit vom Gradienten der Drehzahl variabel ist.

Wie bereits eingangs erwähnt sind unter dem Begriff Fahrgeschwindigkeitsregelsystem alle Systeme zu verstehen, die eine Geschwindigkeitsregelung vornehmen. Hierzu zählen beispielsweise reine Geschwindigkeitsregelsysteme, wie programmierbare Geschwindigkeitsregelsysteme, aber auch die um eine Abstandsregelung erweiterten Geschwindigkeitsregelsysteme, sog. ACC-Systeme. Der Begriff "Handschaltgetriebe umfasst alle Arten von Getriebe, bei denen der Fahrer durch Eingabe eines Befehls direkt auf die Wahl der Getriebestufe Einfluss nehmen kann.

Erfindungsgemäß ist nun jeder Getriebestufe zumindest eine Aufforderungs-Drehzahlschwelle zugeordnet, die jedoch nicht, wie bei den bekannten Systemen fest vorgegeben ist, sondern in Abhängigkeit vom Gradienten der Drehzahl, also von der ersten zeitlichen Ableitung der Drehzahl, variabel ist. Diese gradientenabhängigen Aufforderungs-Drehzahlschwellen können beispielsweise in einem Kennfeld hinterlegt sein oder in Abhängigkeit von vorgegebenen Parametern, wie bspw. der Reaktionszeit des Fahrers festgelegt werden.

Das erfindungsgemäße Fahrgeschwindigkeitsregelsystem bietet durch die variable Aufforderungs-Drehzahlschwelle somit den Vorteil, dass die Schaltaufforderung an die jeweiligen aktuellen Betriebsbedingungen derart angepasst ist, dass die Aufforderung zum optimalen Zeitpunkt vor dem notwendigen Schaltvorgang ausgegebenen wird und der Fahrer dementsprechend darauf reagieren kann.

Das Kraftfahrzeug kann in Abhängigkeit vom eingelegten Gang nur in einem bestimmten Drehzahlbereich betrieben werden, wobei die Drehzahlbereiche der verschiedenen Gänge bzw. Getriebestufen sich überschneiden können. Vorteilhafterweise ist deshalb die vorgegebene Aufforderungs-Drehzahlschwelle eine obere Aufforderungs-Drehzahlschwelle, bei deren Erreichen die Steuereinheit ein Hochschaltsignal an die Ausgabeeinheit zur Ausgabe einer Hochschaltaufforderung an den Fahrer sendet, oder eine untere Aufforderungs-Drehzahlschwelle, bei deren Erreichen die Steuereinheit ein Rückschaltsignal an die Ausgabeeinheit zur Ausgabe einer Rückschaltaufforderung an den Fahrer sendet.

Durch die Hochschaltaufforderung, die bei Erreichen der oberen Aufforderungs- Drehzahlschwelle ausgegeben wird, wird der Fahrer sozusagen darauf aufmerksam gemacht, dass er einen höheren Gang einlegen sollte oder sogar muss, da die Regelung des Fahrgeschwindigkeitsregelsystems zu einer Drehzahl des Kraftfahrzeugs führt, die im oberen Grenzbereich des maximal möglichen Drehzahlbereichs in der eingelegten Getriebestufe liegt. Schaltet der Fahrer nicht in einen höheren Gang, kann aufgrund eines vorgegebenen oberen Drehzahlgrenzwertes, der nicht überschritten werden kann, die Wunschgeschwindigkeit möglicherweise nicht eingestellt werden. Um dies zu verhindern, wird die Regelung bei Überschreiten der oberen Aufforderungs-Drehzahlschwelle und Erreichen einer oberen Abschalt-Drehzahlschwelle automatisch deaktiviert.

Im Gegensatz dazu wird durch die Rückschaltaufforderung, die bei Erreichen der unteren Aufforderungs- Drehzahlschwelle ausgegeben wird, der Fahrer darauf aufmerksam gemacht, dass er einen niedrigeren Gang einlegen sollte oder sogar muss, da die Regelung des Fahrgeschwindigkeitsregelsystems zu einer Drehzahl des Kraftfahrzeugs führt, die im unteren Grenzbereich des maximal möglichen Drehzahlbereichs in der eingelegten Getriebestufe liegt. Schaltet der Fahrer nicht zurück und würde die Drehzahl aufgrund der aktiven Regelung weiter reduziert werden, könnte es zu einem Abwürgen der Brennkraftmaschine kommen. Um dies zu verhindern wird die Regelung bei Unterschreiten der unteren Aufforderungs-Drehzahlschwelle und Erreichen einer unteren Abschalt-Drehzahlschwelle automatisch deaktiviert.

Vorteilhafterweise wird für zumindest einen Gang eine obere und untere Aufforderungs-Drehzahlschwelle vorgegeben, damit der Fahrer in beiden Fällen auf den notwendigen Schaltvorgang aufmerksam gemacht wird.

Vorteilhafterweise wird die vorgegebene Aufforderungs-Drehzahlschwelle mit betragsmäßig kleiner werdendem Gradienten der Drehzahl bzw. des Drehzahlverlaufs in Richtung der dazugehörigen Abschalt-Drehzahlschwelle verschoben, bei deren Erreichen die Steuereinheit die Fahrgeschwindigkeitsregelung deaktiviert. Die zur oberen Aufforderungs-Drehzahlschwelle dazugehörige obere Abschalt-Drehzahlschwelle ist folglich in einem höheren Drehzahlbereich angeordnet als die obere Aufforderungs-Drehzahlschwelle. Dementsprechend ist die der unteren Aufforderungs-Drehzahlschwelle dazugehörige untere Abschalt-Drehzahlschwelle folglich in einem niedrigeren Drehzahlbereich angeordnet als die untere Aufforderungs-Drehzahlschwelle. Durch eine derartige Verschiebung der Aufforderungs-Drehzahlschwelle kann unter der Voraussetzung, dass der Gradient der Drehzahl gleich bleibt, sichergestellt werden, dass der Fahrer stets mit einem in etwa identischen Zeitabstand bis zum möglicherweise Erreichen der dazugehörigen Abschalt-Drehzahlschwelle zum Schalten aufgefordert wird.

In der Zeichnung ist ein Ausführungsbeispiel der Erfindung dargestellt. Dabei zeigt
- Fig. 1: verschiedene Positionen einer variablen oberen Aufforderungs-Drehzahlschwelle und
- Fig. 2: verschiedene Positionen einer variablen unteren Aufforderungs-Drehzahlschwelle.

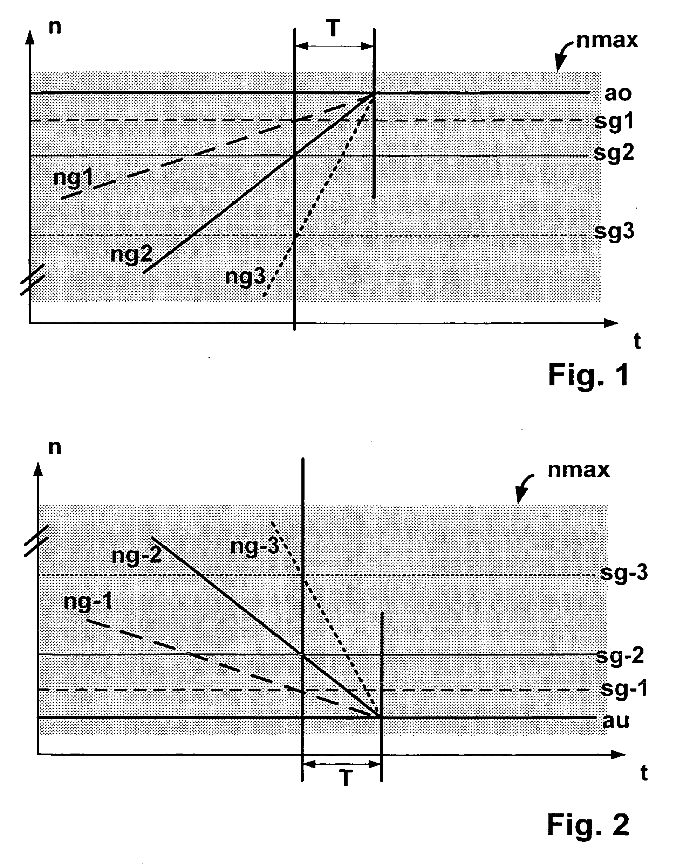

In der Fig. 1 sind verschiedene Positionen sg1, sg2 und sg3 einer vom Gradienten der Drehzahl bzw. des Drehzahlverlaufs ng1, ng2 oder ng3 abhängigen variablen oberen Aufforderungs-Drehzahlschwelle dargestellt. Dabei ist mittels einer punktierten Fläche der maximale Drehzahlbereich nmax dargestellt, in dem das mit dem erfindungsgemäßen Fahrgeschwindigkeitsregelsystem und mit Handschaltgetriebe ausgestattete Kraftfahrzeug in einem bestimmten Gang betrieben werden kann. Die Linie ao stellt eine obere Abschalt-Drehzahlschwelle dar, bei deren Erreichen im fahrgeschwindigkeitsgeregelten Betrieb die Fahrgeschwindigkeitsregelung automatisch deaktiviert werden würde, um Motorschäden zu vermeiden.

Die unterhalb der Abschalt-Drehzahlschwelle dargestellten Linien sg1, sg2 und sg3 zeigen verschiedene Positionen der zur Abschalt-Drehzahlschwelle ao zugehörigen Aufforderungs-Drehzahlschwelle, bei deren Erreichen eine zum Fahrgeschwindigkeitsregelsystem gehörende Steuereinheit ein Signal an eine Ausgabeeinheit zur Ausgabe einer Schaltaufforderung an den Fahrer des Kraftfahrzeugs sendet. Diese unterschiedlichen Positionen sg1, sg2 und sg3 der Aufforderungs-Drehzahlschwelle ergeben sich aus dem jeweiligen Gradienten bzw. der jeweiligen Steigung der verschiedenen Drehzahlverläufe ng1, ng2 und ng3. Im fahrgeschwindigkeitsgeregelten Betrieb des Kraftfahrzeugs wird in einer zum Fahrgeschwindigkeitsregelsystem gehörenden Steuereinheit die aktuelle Drehzahl des derzeitige Drehzahlverlaufs ng1, ng2 oder ng3 mit der dazugehörigen gradientenabhängigen Aufforderungs-Drehzahlschwelle sg1, sg2 oder sg3 verglichen. Bei Erreichen der entsprechenden Aufforderungs-Drehzahlschwelle sg1, sg2 oder sg3 sendet die Steuereinheit ein Signal an eine Ausgabeeinheit zur Ausgabe einer Schaltaufforderung - in diesem Fall einer Hochschaltaufforderung - an den Fahrer des Kraftfahrzeugs.

Wie aus der Fig. 1 ersichtlich ist, weist der Drehzahlverlauf ng3 den größten Gradienten auf, der Drehzahlverlauf ng2 einen mittleren Gradienten und der Drehzahlverlauf ng1 den kleinsten Gradienten. Mit kleiner werdendem Gradienten wird die Aufforderungs-Drehzahlschwelle in Richtung der dazugehörigen Abschalt-Drehzahlschwelle ao, also in Richtung einer größeren Drehzahl verschoben. Da der Drehzahlverlauf ng3 in dieser Fig. 1 den größten Gradienten hat, ist die Aufforderungs-Drehzahlschwelle sg3 am weitesten von der dazugehörigen Abschalt-Drehzahlschwelle ao entfernt. Im Gegensatz dazu hat der Drehzahlverlauf ng1 den kleinsten Gradienten, weshalb die Aufforderungs-Drehzahlschwelle sg1 auch am nächsten an der dazugehörigen Abschalt-Drehzahlschwelle ao positioniert ist. Die Aufforderungs-Drehzahlschwelle sg2 ist zwischen den Aufforderungs-Drehzahlschwellen sg1 und sn3 positioniert, da der Gradient des Drehzahlverlaufs ng2 einen Wert zwischen den Gradienten der Drehzahlverläufe ng1 und ng3 hat.

Die konkrete Positionierung der Aufforderungs-Drehzahlschwellen sg1, sg2 und sg3 ergibt sich dadurch, dass die Schaltaufforderung an den Fahrer bei Erreichen derAufforderungs-Drehzahlschwelle sg1, sg2 bzw. sg3 den gleichen zeitlichen Abstand T zu einer möglicherweise hervorgerufenen automatischen Abschaltung der Fahrgeschwindigkeitsregelung haben sollte, wenn der Fahrer der Schaltaufforderung nicht folgt.

In der Fig. 2 sind im Unterschied zur Fig. 1 nicht verschiedene Positionen sg1, sg2 und sg3 der variablen oberen Aufforderungs-Drehzahlschwelle, sondern verschiedene Positionen sg-1, sg-2 und sg-3 einer variablen unteren Aufforderungs-Drehzahlschwelle dargestellt.

In der Fig. 2 ist ebenfalls mittels einer punktierten Fläche der maximale Drehzahlbereich nmax dargestellt, in dem das mit dem erfindungsgemäßen Fahrgeschwindigkeitsregelsystem und mit Handschaltgetriebe ausgestattete Kraftfahrzeug in einem bestimmten Gang betrieben werden kann. Die Linie au stellt eine untere Abschalt-Drehzahlschwelle dar, bei deren Erreichen im fahrgeschwindigkeitsgeregelten Betrieb die Fahrgeschwindigkeitsregelung automatisch deaktiviert werden würde, um eine Abwürgen des Motors zu vermeiden.

Die oberhalb der Abschalt-Drehzahlschwelle au dargestellten Linien sg-1, sg-2 und sg-3 zeigen verschiedene Positionen der zur unteren Abschalt-Drehzahlschwelle au zugehörigen Aufforderungs-Drehzahlschwelle, bei deren Erreichen eine zum Fahrgeschwindigkeitsregelsystem gehörende Steuereinheit ein Signal an eine Ausgabeeinheit zur Ausgabe einer Schaltaufforderung an den Fahrer des Kraftfahrzeugs sendet. Diese unterschiedlichen Positionen sg-1, sg-2 und sg-3 der Aufforderungs-Drehzahlschwelle ergeben sich ebenfalls aus dem jeweiligen Gradienten bzw. der jeweiligen Steigung der verschiedenen Drehzahlverläufe ng-1, ng-2 und ng-3.

Wie aus der Fig. 2 ersichtlich ist, weist der Drehzahlverlauf ng-3 betragsmäßig den größten Gradienten auf, der Drehzahlverlauf ng-2 einen mittleren Gradienten und der Drehzahlverlauf ng-1 betragsmäßig den kleinsten. Mit betragsmäßig kleiner werdendem Gradienten wird die Aufforderungs-Drehzahlschwelle in Richtung der dazugehörigen Abschalt-Drehzahlschwelle au, in diesem Fall somit in Richtung einer kleineren Drehzahl verschoben. Da der Drehzahlverlauf ng-3 in dieser Fig. 2 betragsmäßig den größten Gradienten hat, ist die Aufforderungs-Drehzahlschwelle sg-3 am weitesten von der dazugehörigen Abschalt-Drehzahlschwelle au entfernt. Im Gegensatz dazu hat der Drehzahlverlauf ng-1 betragsmäßig den kleinsten Gradienten, weshalb die Aufforderungs-Drehzahlschwelle sg-1 auch am nächsten an der dazugehörigen Abschalt-Drehzahlschwelle au positioniert ist. Die Aufforderungs-Drehzahlschwelle sg-2 ist zwischen den Aufforderungs-Drehzahlschwellen sg-1 und sg-3 positioniert, da der Gradient des Drehzahlverlaufs ng-2 einen Wert zwischen den Gradienten der Drehzahlverläufe ng-1 und ng-3 hat.

Analog dem Ausführungsbeispiel in Fig. 1 wird auch in Fig. 2 die Aufforderungs-Drehzahlschwelle sg-1, sg-2 und sg-3 konkret so positioniert, dass die Schaltaufforderung an den Fahrer bei Erreichen der Aufforderungs-Drehzahlschwelle sg-1, sg-2 bzw. sg-3 den gleichen zeitlichen Abstand T zu einer möglicherweise hervorgerufenen automatischen Abschaltung der Fahrgeschwindigkeitsregelung haben sollte, wenn der Fahrer der Schaltaufforderung nicht folgt.

Die in Fig. 1 und Fig. 2 dargestellten verschiedenen Positionen der oberen bzw. der unteren Aufforderungs-Drehzahlschwelle sg1 - sg3 bzw. sg-1 - sg-3 stellen nur eine mögliche Art der Positionierung dar. Alternativ dazu wäre auch denkbar, dass bei der Positionierung der in Abhängigkeit vom Gradienten der Drehzahl variablen Aufforderungs-Drehzahlschwelle zusätzlich weitere Einflussfaktoren, wie Straßenbeschaffenheit, Witterungsbedingungen oder Fahrerverhaltensfaktoren mitberücksichtigt werden.

## Patentansprüche

1. Fahrgeschwindigkeitsregelsystem für ein Kraftfahrzeug mit Handschaltgetriebe, mit einer Steuereinheit, das die aktuell ermittelte Drehzahl des Kraftfahrzeugs mit einer vorgegebenen gangabhängigen Aufforderungs-Drehzahlschwelle vergleicht und das bei Erreichen der vorgegebenen gangabhängigen Aufforderungs-Drehzahlschwelle ein Signal an eine Ausgabeeinheit zur Ausgabe einer Schaltaufforderung an den Fahrer des Kraftfahrzeugs sendet, **dadurch gekennzeichnet, dass** die vorgegebene Aufforderungs-Drehzahlschwelle (sg1, sg2, sg3, sg-1, sg-2, sg-3) in Abhängigkeit vom Gradienten der Drehzahl (ng1, ng2, ng3, ng-1, ng-2, ng-3) variabel ist.

2. Fahrgeschwindigkeitsregelsystem nach Anspruch 1, **dadurch gekennzeichnet, dass** die vorgegebene Aufforderungs-Drehzahlschwelle eine obere Aufforderungs-Drehzahlschwelle (sg1, sg2, sg3) ist, bei deren Erreichen die Steuereinheit ein Hochschaltsignal an die Ausgabeeinheit zur Ausgabe einer Hochschaltaufforderung an den Fahrer sendet, oder dass die vorgegebene Aufforderungs-Drehzahlschwelle eine untere Aufforderungs-Drehzahlschwelle (sg-1, sg-2, sg-3) ist, bei deren Erreichen die Steuereinheit ein Rückschaltsignal an die Ausgabeeinheit zur Ausgabe einer Rückschaltaufforderung an den Fahrer sendet.

3. Fahrgeschwindigkeitsregelsystem nach Anspruch 1 oder 2, **dadurch gekennzeichnet, dass** für zumindest einen Gang eine obere (sg1, sg2, sg3) und untere (sg-1, sg-2, sg-3) Aufforderungs-Drehzahlschwelle vorgegeben ist.

4. Fahrgeschwindigkeitsregelsystem nach einem der vorangegangenen Ansprüche, **dadurch gekennzeichnet, dass** die vorgegebene Aufforderungs-Drehzahlschwelle (sg1, sg2, sg3, sg-1, sg-2, sg-3) mit betragsmäßig kleiner werdendem Gradienten der Drehzahl (ng1, ng2, ng3, ng-1, ng-2, ng-3) in Richtung einer dazugehörigen Abschalt-Drehzahlschwelle (ao, au) verschoben wird, bei deren Erreichen die Steuereinheit die Fahrgeschwindigkeitsregelung deaktiviert.

## Claims

1. A cruise control system for a motor vehicle with manual transmission, comprising a control unit which compares the currently determined engine speed of the vehicle with a predetermined gear-dependent request speed threshold and which, on reaching the predetermined gear-dependent request speed threshold, transmits a signal to an output unit to output a gear change request to the driver of the vehicle, **characterised in that** the predetermined request speed threshold (sg1, sg2, sg3, sg-1, sg-2, sg-3) is variable as a function of the gradient of the engine speed (ng1, ng2, ng3, ng-1, ng-2, ng-3).

2. A cruise control system according to claim 1, **characterised in that** the predetermined request speed threshold is an upper request speed threshold (sg1, sg2, sg3), on reaching which the control unit transmits an upshift signal to the output unit to output an upshift request to the driver, or that the predetermined request speed threshold is a lower request speed threshold (sg-1, sg-2, sg-3), on reaching which the control unit transmits a downshift signal to the output unit to output a downshift request to the driver.

3. A cruise control system according to claim 1 or 2, **characterised in that** an upper request speed threshold (sg1, sg2, sg3) and a lower request speed threshold (sg-1, sg-2, sg-3) are predetermined for at least one gear.

4. A cruise control system according to any one of the preceding claims, **characterised in that,** as the gradient of the engine speed (ng1, ng2, ng3, ng-1, ng-2, ng-3) decreases according to amount, the predetermined request speed threshold (sg1, sg2, sg3, sg-1, sg-2, sg-3) is moved in the direction of an associated disconnection speed threshold (ao, au), on reaching which the control unit deactivates the cruise control.

## Revendications

1. Système de régulation de vitesse de déplacement d'un véhicule équipé d'une boîte de vitesses à commande manuelle comportant une unité de commande qui compare la vitesse de rotation déterminée actuellement du véhicule à un seuil de vitesse de rotation demandé, prédéfini, dépendant du rapport de vitesses et, lorsqu'on atteint le seuil de vitesse de rotation demandé prédéfini, dépendant du rapport de vitesses, un signal est fourni à une unité d'émission qui émet un ordre de changement de rapport à destination du conducteur du véhicule,
**caractérisé en ce que**
le seuil de vitesse de rotation demandé, prédéfini (sg1, sg2, sg3, sg-1, sg-2, sg-3) est variable en fonction du gradient de la vitesse de rotation (ng1, ng2, ng3, ng-1, ng-2, ng-3).

2. Système de régulation de vitesse de déplacement selon la revendication 1,
**caractérisé en ce que**
le seuil de vitesse de rotation demandé prédéfini est un seuil de vitesse de rotation demandé supérieur (sg1, sg2, sg3) et lorsqu'il est atteint, l'unité de commande émet un signal de montée de rapport à l'unité d'émission pour que celle-ci émette une demande de montée de rapport à destination du conducteur, ou le seuil de vitesse de rotation demandé prédéfini est un seuil de vitesse de rotation demandé, inférieur (sg-1, sg-2, sg-3) et lorsqu'on atteint celui-ci, l'unité de commande envoie un signal de descente de rapport à l'unité d'émission pour émettre une demande de descente de rapport à destination du conducteur.

3. Système de régulation de vitesse de déplacement selon l'une des revendications 1 ou 2,
**caractérisé en ce que**
pour au moins un rapport on prédéfinit un seuil de vitesse de rotation demandé supérieur (sg1, sg2, sg3) et un seuil de vitesse de rotation demandé inférieur (sg-1, sg-2, sg-3).

4. Système de régulation de vitesse de déplacement selon l'une des revendications précédentes,
**caractérisé en ce que**
le seuil de vitesse de rotation demandé, prédéfini (sg1, sg2, sg3, sg-1, sg-2, sg-3), est décalé en fonction des gradients diminuant de la vitesse de rotation (ng1, ng2, ng3, ng-1, ng-2, ng-3), en direction d'un seuil de vitesse de rotation de coupure (ao, au) correspondant, et lorsqu'il est atteint, l'unité de commande neutralise la régulation de vitesse de déplacement.
